# EUROPÄISCHE PATENTSCHRIFT

(11) **EP 1 364 189 B1**
(45) Veröffentlichungstag und Bekanntmachung des Hinweises auf die Patenterteilung: **01.06.2005**
(21) Anmeldenummer: 01988073.1
(22) Anmeldetag: 22.12.2001
(51) Int. Cl.: G01F 23/00, F01M 11/10, F02B 77/08

(54) **VERFAHREN ZUR ERMITTLUNG DER FÜLLMENGE EINES BETRIEBSMITTELS IN EINEM KRAFTFAHRZEUG**
METHOD FOR DETERMINING THE AMOUNT OF AN OPERATING MEDIUM IN A MOTOR VEHICLE
PROCEDE PERMETTANT DE DETERMINER LE NIVEAU D'UN PRODUIT DE FONCTIONNEMENT DANS UN VEHICULE A MOTEUR

(30) Priorität: 09.02.2001 DE 10105889
(43) Veröffentlichungstag der Anmeldung: 26.11.2003
(73) Patentinhaber: DaimlerChrysler AG, 70567 Stuttgart (DE)
(72) Erfinder: GÜRTLER, Thomas, 70499 Stuttgart (DE); HELLWIG, Hartwig, 70329 Stuttgart (DE); LAND, Klaus, 73278 Schlierbach (DE); OTT, Harald, 74343 Sachsenheim (DE); RIEDEL, Martin-Kai, 72622 Nürtingen (DE)
(86) Internationale Anmeldenummer: PCT/EP2001/015294
(87) Internationale Veröffentlichungsnummer: WO 2002/065065

(56) Entgegenhaltungen:
- EP-A- 1 063 498
- FR-A- 2 808 085
- JP-A- 4 310 824
- JP-A- 9 068 453

## Beschreibung

Die Erfindung betrifft ein Verfahren zur Ermittlung der Füllmenge eines Betriebsmittels in einem Kraftfahrzeug, insbesondere der Motorölmenge, gemäß dem Oberbegriff des Patentanspruchs 1.

Aus der gattungsbildenden EP 1 063 498 ist ein Verfahren zur Bestimmung einer Flüssigkeitsmenge, insbesondere der Motorölmenge in einem Kraftfahrzeug bekannt. Der mittels des Füllstandssensors erfasste Füllstand der Flüssigkeit schwankt fahrzustandsabhängig, wodurch die Bestimmung der Flüssigkeitsmenge beeinträchtigt wird. Um den Einfluss der Füllstandsschwankungen, welche insbesondere im Fahrbetrieb auftreten, zu verringern, werden fahrzustandsindikative Größen erfasst und aus den fahrzustandsindikativen Größen wird der momentane Fahrzustand ermittelt. Während ausgewählter Fahrzustände wird der Füllstand der Flüssigkeit erfasst und mittels diesem wird die Füllmenge der Flüssigkeit bestimmt. Diese Bestimmung erfolgt anhand einer bekannten Abhängigkeit des Füllstands der Flüssigkeit von der Füllmenge der Flüssigkeit und vom Fahrzustand. Voraussetzung für den Start des Verfahrens zur Bestimmung der Flüssigkeitsmenge ist, dass festgelegte Bedingungen für die Flüssigkeitstemperatur, den Zündstatus und die Geschwindigkeit erfüllt sind. Der erfasste Füllstandswert wird digital gefiltert, wodurch kurzzeitige Schwankungen des Füllstands eliminiert werden. Außerdem wird im Fall der Bestimmung der Motorölmenge die Motordrehzahl berücksichtigt. Es ist erwähnt, dass weitere Größen, wie die Fahrzeuggeschwindigkeit, die Temperatur und der Kilometerstand bei der Bestimmung der Motorölmenge berücksichtigt werden können, und dass eine statistische Mittelung der Messwerte die Zuverlässigkeit der Ermittlung einer Flüssigkeitsmenge weiter erhöht.

Neigt sich das Fahrzeug, beispielsweise aufgrund einer Bergfahrt, so neigt sich der Flüssigkeitsvorratsbehälters gleichermaßen und man erhält am Füllstandssensor einen Flüssigkeitsstand, der in Abhängigkeit vom Einbauort des Füllstandssensors vom Flüssigkeitsstand bei waagerechtem Fahrzeug häufig abweicht. Ermittelt man aus dem gemessenen Flüssigkeitsstand die Flüssigkeitsmenge ohne die Winkellage des Fahrzeugs zu berücksichtigen, so kann sich ein falsches Ergebnis ergeben.

Aus der DE 4042472 C2 ist eine Anordnung zur Bestimmung der Motorölmenge mittels einer Messung des Motorölstands und einer Messung der Winkellage des Fahrzeugs bekannt. Es ist für jede vorgegebene Motorölmenge ein eindeutiger Zusammenhang zwischen Winkellage des Fahrzeugs und Ölstand im Motor vorhanden. Dieser Zusammenhang wird ausgenutzt, um aus der Winkellage des Fahrzeugs und dem Ölstandswert auf die Motorölmenge zu schließen. Die Winkellage des Fahrzeugs wird mit einem Winkelmessgerät erfasst und mittels einer Datenverarbeitungseinrichtung wird die Motorölmenge unter Heranziehen der Winkellage des Fahrzeugs berechnet. Die tatsächliche und/oder gemessene Winkellage eines Fahrzeugs bezieht sich auf das Schwerefeld der Erde. Hierauf beziehen sich im Weiteren auch die beiden Größen Neigung eines Fahrzeugs und Steigung (Längsneigung) einer Straße.

Bei einem anderen Verfahren zur Ermittlung der Füllmenge des Betriebsmittels, wird der Füllstand des Betriebsmittels an zwei oder mehr Stellen im Vorratsbehälter des Betriebsmittels erfasst. Aus den erfassten Füllstandswerten kann die Füllmenge auch bei unbekannter Winkellage des Fahrzeugs berechnet werden, da die Füllstände für jede Winkellage in einer festgelegten Beziehung zueinander stehen, welche vom Anbringungsort der Füllstandssensoren und der Geometrie des Vorratsbehälters abhängt. Zur Durchführung dieses Verfahrens sind allerdings mindestens zwei Füllstandssensoren nötig. Mit zwei Füllstandssensoren kann die Winkellage des Fahrzeugs in Richtung der Verbindungslinie der beiden Sensoren bestimmt werden. Darüber hinaus ist mit drei oder mehr Füllstandsensoren, welche nicht in einer Reihe angeordnet sind, die Bestimmung der Winkellage des Fahrzeugs in beliebiger Richtung, also auch in Richtung der Fahrzeuglängsachse und Quer zur Fahrzeuglängsachse möglich.

Aufgabe der Erfindung ist es, ein Verfahren zur Ermittlung der Füllmenge des Betriebsmittels anzugeben, welches diejenigen bekannten Verfahren, welche nur einen Füllstandssensor als spezifischen Sensor aufweisen, verbessert. Die Aufgabe wird erfindungsgemäß durch die Merkmale des Anspruchs 1 gelöst.

Die Erfindung geht aus einem Verfahren hervor, bei dem mittels mehreren Parametern, welche zur Ermittlung der Füllmenge des Betriebsmittels von einer Datenverarbeitungseinrichtung herangezogen werden, eine Korrektur des erfassten Füllstandes des Betriebsmittels durchgeführt wird. Zur Erfassung des Füllstands im Vorratsbehälter des Betriebsmittel ist ein Füllstandssensor vorgesehen. Als weitere Parameter werden Betriebszustände des Fahrzeugs erfasst und der Datenverarbeitungsanlage bereitgestellt. Beispiele für diese Betriebszustände sind die Temperatur des Betriebsmittels und die Motordrehzahl.

Um den Einfluss der momentanen Steigung der befahrenen Strasse auf den erfassten Motorölstand zu korrigieren wird ein Parameter erfasst, der ein Maß für die Steigung (Längsneigung) der Strasse darstellt. Ein solcher Parameter ist die Motorlast, welche bei Bergauffahrt mit zunehmender Steigung größer wird und bei Bergabfahrt mit zunehmender Steigung fällt. Erfindungsgemäß wird aus einer charakteristischen Größe für die Motorlast auf die Steigung der Strasse geschlossen, und mittels der Steigung der Strasse wird der Motorölstand korrigiert. Zur Ergänzung des Parameters Motorlast können fahrdynamische Größen herangezogen werden, welche einen Hinweis auf die Steigung der befahrenen Straße geben. Vorteil des erfindungsgemäßen Verfahrens ist, dass die Füllmenge des Betriebsmittels ohne zusätzlichen Aufwand an Sensoren genauer und zuverlässiger ermittelt wird.

In einer Ausgestaltung des Verfahrens wird als charakteristische Größe für die Motorlast die Gaspedalstellung erfasst und zur Ermittlung der Füllmenge des Betriebsmittels herangezogen. Die Gaspedalstellung ist eine Größe, welche direkt auf die Leistungserzeugung des Motors wirkt und somit charakteristisch ist für die Last des Motors. Zudem ist die Gaspedalstellung eine Größe, welche bereits als Signal auf einem Datenbus verfügbar ist.

In einer anderen Ausgestaltung des Verfahrens wird als charakteristische Größe für die Motorlast die Drosselklappenstellung herangezogen. Diese Größe ist bei vielen Fahrzeugen ebenfalls auf einem Datenbus im Fahrzeug verfügbar.

In einer alternativen Ausgestaltung des Verfahrens wird als charakteristische Größe für die Motorlast eine physikalische Größe wie Kraft, Drehmoment oder Leistung am Antriebstrang, das heißt zwischen Motor und Rad erfasst. Eine solche Größe ist ein unmittelbares Maß für die Motorlast.

Das erfindungsgemäße Verfahren ist insbesondere anwendbar zur Ermittlung der Füllmenge von Flüssigkeiten in Vorratsbehältern im Fahrzeug, wie beispielsweise Getriebeöl, Bremsflüssigkeit, Kühlflüssigkeit oder Kraftstoff.

Es gibt nun verschiedene Möglichkeiten, die Lehre der vorliegenden Erfindung in vorteilhafter Weise auszugestalten. Nachfolgend wird eine vorteilhafte Ausführungsform des erfindungsgemäßen Verfahrens zur Ermittlung der Füllmenge des Betriebsmittels in einem Kraftfahrzeug anhand der Zeichnung näher beschrieben.

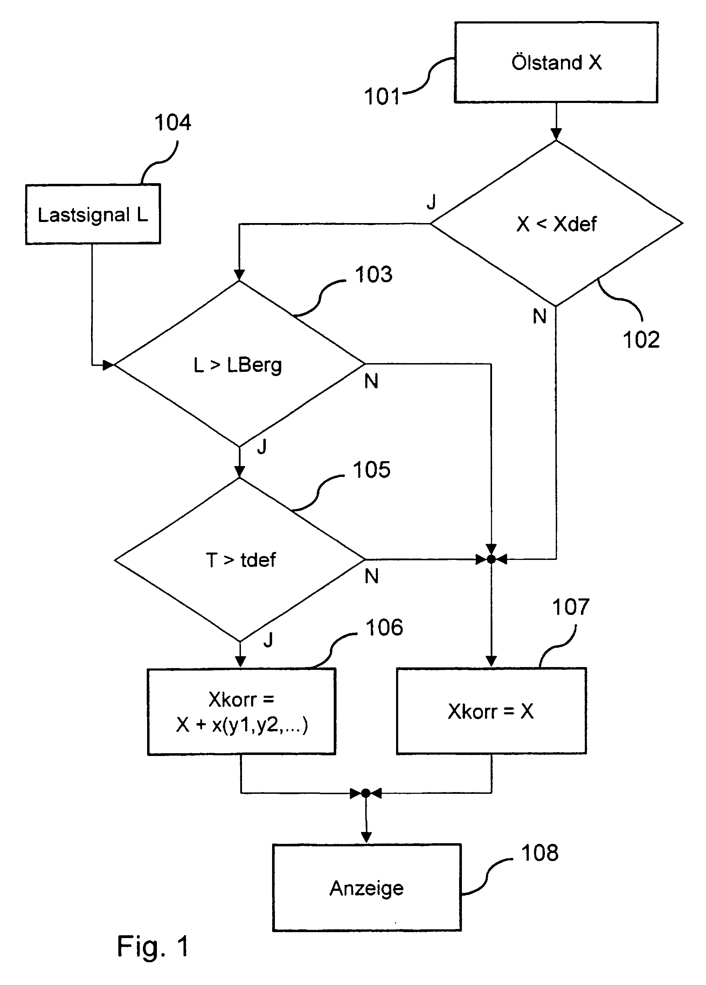

Die Fig. 1 zeigt ein Ablaufdiagramm einer vorteilhaften Ausführungsform des Verfahrens in schematischer Darstellung. Der Füllstand hängt eindeutig mit der Füllmenge zusammen, wodurch sich aus dem Füllstand, beispielsweise mittels eines funktionalen Zusammenhangs über eine Kennlinie oder mit Hilfe einer Tabelle, die Füllmenge bestimmen lässt. Eine verbesserte Ermittlung der Füllmenge eines Betriebsmittels kann somit mittels einer verbesserten Ermittlung des Füllstands des Betriebsmittels erreicht werden. Hierbei ist unter dem ermittelten Füllstand ein Wert zu verstehen, welcher einem unter vorgegebenen Bedingungen gemessenen Füllstand entspricht und verschieden sein kann vom tatsächlich gemessenen Füllstand. Mittels der dargestellten Ausführungsform des Verfahren wird aus einem Füllstand X ein korrigierter Füllstand Xkorr ermittelt, welcher der tatsächlichen Füllmenge besser entspricht als der Füllstand X.

Das erfindungsgemäße Verfahren wird in Abhängigkeit von vorgebbaren Startbedingungen gestartet. Diese Startbedingungen betreffen beispielsweise die Betriebsmitteltemperatur, die Fahrzeuggeschwindigkeit, die Motordrehzahl, den Zündstatus, den Status elektrischer Verbraucher, die Querbeschleunigung, die Längsbeschleunigung und die Gierrate. Diese Parameter können außer in die Startbedingungen auch in Abbruchbedingungen für das erfindungsgemäße Verfahren eingehen.

Zu den Start- und Abbruchbedingungen können noch Bedingungen für die Messwerterfassung vorgegeben werden. Sind diese Bedingungen nicht erfüllt, so werden keine Messwerte erfasst oder die erfassten Messwerte werden nicht zur Ermittlung der Füllmenge des Betriebsmittels herangezogen. In die Bedingungen für die Messwerterfassung können dieselben Parameter eingehen wie in die Startbedingungen.

Das Ablaufdiagramm ist für den Fall einer Bergauffahrt gewählt, und der Füllstandssensors ist derart angeordnet, dass bei einer Bergauffahrt, also bei einer Neigung des Fahrzeugs nach hinten, der Füllstand des Betriebsmittels am Füllstandssensor geringer wird.

In Verfahrensschritt 101 wird der Füllstand X eingelesen. Der Füllstand X ist ein Wert, welcher sich aus einer Verarbeitung des Werts ergibt, der vom Füllstandssensor erfasst wird. Beispielsweise kann der Füllstand X aus dem erfassten Füllstand durch Filterung mittels eines Tiefpassfilters hervor gehen oder der Wert X kann ein zeitlich gemittelter Wert des vom Füllstandssensor erfassten Füllstands sein.

In der Abfrage 102 wird geprüft, ob der Füllstand X niedriger als ein vorgebbarer Wert Xdef ist. Ist dies der Fall, so wird in Schritt 103 geprüft, ob das Lastsignal L (eine charakteristische Größe für die Motorlast), welche in Schritt 104 aus einem Datenbus des Fahrzeugs ausgelesen wird, größer als ein vorgebbarer Wert LBerg ist. Dieser Wert LBerg hängt insbesondere von der Geometrie des Betriebsmittelvorratsbehälters und von dem Anbringungsort des Füllstandssensors ab. Bei einer Geometrie des Betriebsmittelvorratsbehälters mit einer starken Veränderung des Füllstands am Füllstandsensor bereits bei kleinen Steigungen, wird der Wert LBerg kleiner gewählt, wogegen bei einer Geometrie des Betriebsmittelvorratsbehälters, bei der die Steigung der Bergauffahrt nur einen geringen Einfluss auf den Füllstand am Füllstandssensor hat, ein größerer Wert für LBerg vorgegeben wird. Ist das Lastsignal L größer als der vorgegebene Wert LBerg so wird in Schritt 105 geprüft ob über einen vorgebbaren Zeitraum hinweg die Bedingungen 102 und 103 erfüllt sind, das heißt ob der Füllstand X geringer als ein vorgegebener Füllstand Xdef und das charakteristische Signal für die Motorlast L größer als ein vorgegebener Schwellwert LBerg ist. Sind die beiden Bedingungen 102 und 103 für eine Zeitdauer tdef oder länger erfüllt, wird in Schritt 106 der Füllstand X korrigiert, indem ein Wert x zum Füllstand X hinzuaddiert wird.

Eine Steigung der Straße und ein Beschleunigungsvorgang haben aufgrund der Gleichheit von träger Masse und schwerer Masse dieselbe physikalische Wirkung. Während eine Bergfahrt jedoch längere, wenig veränderliche Steigungen aufweisen kann dauern Beschleunigungsvorgänge mit nahezu konstanter Beschleunigung des Fahrzeugs selten länger als 10 oder 20 Sekunden. Die kombinierte Prüfung der Schritte 103 und 105 entspricht somit einer mittelbaren Prüfung, ob die Steigung der Strasse größer als eine vorgegebene Steigung ist, weil kurze Beschleunigungsvorgänge durch die Zeitabfrage 105 eliminiert werden, falls beispielsweise tdef = 15 s gewählt wird.

Die Korrektur des Füllstands in Schritt 106 kann in einer einfachen Addition eines konstanten Korrekturwertes bestehen. Alternativ kann der Korrekturterm auch eine Funktion anderer Parameter, wie beispielsweise der Steigung, der Last, der Betriebsmitteltemperatur oder der Fahrzeugbeladung sein.

Wurde eine der Bedingungen 102, 103 und 105 nicht erfüllt, das heißt ist der Füllstand X größer als ein vorgegebener Wert Xdef, ist das Lastsignal L kleiner als der vorgegebene Wert LBerg oder sind die beiden Bedingungen nicht für mindestens eine vorgegebene Zeitdauer tdef erfüllt, so wird ausgehend von der betreffenden Abfrage nach Schritt 107 verzweigt und der Füllstand X wird unverändert belassen, das heißt der korrigierte Füllstand Xkorr ist gleich dem Füllstand X. Der Füllstand Xkorr, beziehungsweise die Füllmenge, welche aus Xkorr ermittelt wird, wird in Schritt 108 angezeigt. Alternativ oder ergänzend können der korrigierte Füllstand Xkorr oder die daraus berechnete Füllmenge zur weiteren Verarbeitung bereitgestellt werden.

In einer aufwändigeren Ausführungsform des Verfahrens sind mehrere Schwellen für den Füllstand X, die Last L und die Zeit t vorgegeben und in Abhängigkeit der überschrittenen Schwellen werden unterschiedliche Korrekturterme x zum Füllstand X addiert. Es kann auch ein funktionaler Zusammenhang zwischen den Parametern X, L, t und x zur Korrektur des Füllstands X vorgegeben werden.

Das in Fig.1 dargestellte Verfahren zur Ermittlung des Füllmenge des Betriebsmittels wird für den Fall einer Bergabfahrt in Schritt 103 dahingehend verändert, dass das Vorzeichen der Abfrage gedreht wird und für LBerg ein anderer Wert vorgegeben wird. Außerdem muss bei gleicher Anordnung des Füllstandssensors, das heißt hinten in der Füllwanne, das Vorzeichen in Schritt 102 gedreht werden und es kann ein anderer Wert Xdef vorgegeben werden.

Ist der Füllstandssensor vorne im Vorratsbehälter des Betriebsmittels angeordnet dreht sich das Vorzeichen in Schritt 102 gegenüber den gleichen Fällen mit einer Anordnung des Füllstandsensors im hinteren Bereich des Vorratsbehälters um.

## Patentansprüche

1. Verfahren zur Ermittlung der Füllmenge eines Betriebsmittels, insbesondere der Motorölmenge, in einem Kraftfahrzeug
- mit einem Vorratsbehälter für das Betriebsmittel,
- mit einem Füllstandssensor zur Erfassung des Füllstands in dem Vorratsbehälter,
- mit einer Datenverarbeitungseinrichtung zur Ermittlung der Füllmenge des Betriebsmittels,
bei dem der Füllstand des Betriebsmittels und Betriebszustände des Fahrzeugs erfasst werden, und bei dem von der Datenverarbeitungseinrichtung aus den erfassten Daten die Füllmenge des Betriebsmittels ermittelt wird,
**dadurch gekennzeichnet, dass**
als eine charakteristische Größe für die Motorlast die Gaspedalstellung erfasst und zur Ermittlung der Füllmenge des Betriebsmittels herangezogen wird, um den Einfluss der momentanen Steigung der befahrenen Strasse auf den Ölstand zu korrigieren.

2. Verfahren zur Ermittlung der Füllmenge eines Betriebsmittels, insbesondere der Motorölmenge, in einem Kraftfahrzeug
- mit einem Vorratsbehälter für das Betriebsmittel,
- mit einem Füllstandssensor zur Erfassung des Füllstands in dem Vorratsbehälter,
- mit einer Datenverarbeitungseinrichtung zur Ermittlung der Füllmenge des Betriebsmittels,
bei dem der Füllstand des Betriebsmittels und Betriebszustände des Fahrzeugs erfasst werden, und bei dem von der Datenverarbeitungseinrichtung aus den erfassten Daten die Füllmenge des Betriebsmittels ermittelt wird,
**dadurch gekennzeichnet, dass**
als eine charakteristische Größe für die Motorlast
die Drosselklappenstellung erfasst und zur Ermittlung der Füllmenge des Betriebsmittels herangezogen wird, um den Einfluss der momentanen Steigung der befahrenen Strasse auf den Ölstand zu korrigieren.

## Revendications

1. Procédé destiné à déterminer le niveau de remplissage d'un produit consommable, en particulier le niveau d'huile pour moteur, dans un véhicule à moteur
- avec un réservoir de stockage pour le produit consommable,
- avec un capteur de niveau de remplissage pour la détection du niveau de remplissage dans le réservoir de stockage,
- avec un dispositif de traitement des données pour la détermination du niveau de remplissage du produit consommable,
dans lequel le niveau de remplissage du produit consommable et les régimes du véhicules automobile sont obtenus, et dans lequel le niveau de remplissage du produit consommable est déterminé par le dispositif de traitement des données à partir des données obtenues,
**caractérisé en ce que** la position de la pédale d'accélérateur est obtenue comme une grandeur caractéristique de la charge du moteur et **en ce qu'**elle est utilisée pour déterminer le niveau de remplissage du produit consommable pour corriger l'influence de la pente momentanée de la route parcourue sur le niveau d'huile.

2. Procédé destiné à déterminer le niveau de remplissage d'un produit consommable, en particulier le niveau d'huile pour moteur, dans un véhicule à moteur
- avec un réservoir de stockage pour le produit consommable,
- avec un capteur de niveau de remplissage pour la détection du niveau de remplissage dans le réservoir de stockage,
- avec un dispositif de traitement des données pour la détermination du niveau de remplissage du produit consommable,
dans lequel le niveau de remplissage du produit consommable et les régimes du véhicules automobile sont obtenus, et dans lequel le niveau de remplissage du produit consommable est déterminé par le dispositif de traitement des données à partir des données obtenues,
**caractérisé en ce que** la position de la soupape d'étranglement est obtenue comme une grandeur caractéristique de la charge du moteur et **en ce qu'**elle est utilisée pour déterminer le niveau de remplissage du produit consommable pour corriger l'influence de la pente momentanée de la route parcourue sur le niveau d'huile.

## Claims

1. Method of ascertaining the fill quantity of an operating medium, in particular the quantity of engine oil, in a motor vehicle
- with a supply container for the operating medium,
- with a fill level sensor for recording the fill level in the supply container,
- with a data processing device for ascertaining the fill quantity of the operating medium,
wherein the fill level of the operating medium and operating conditions of the vehicle are recorded and wherein the fill quantity of the operating medium is ascertained by the data processing device from the recorded data,
**characterised in that** the accelerator position is recorded as a characteristic value for the engine load and is used for determining the fill quantity of the operating medium in order to correct the influence of the momentary gradient of the road being driven on upon the oil level.

2. Method of ascertaining the fill quantity of an operating medium, in particular the quantity of engine oil, in a motor vehicle
- with a supply container for the operating medium,
- with a fill level sensor for recording the fill level in the supply container,
- with a data processing device for ascertaining the fill quantity of the operating medium,
wherein the fill level of the operating medium and operating conditions of the vehicle are recorded and wherein the fill quantity of the operating medium is ascertained from the recorded data by the data processing device,
**characterised in that**
the throttle valve position is recorded as a characteristic value for the engine load and is used for determining the fill quantity of the operating medium in order to correct the influence of the momentary gradient of the road being driven on upon the oil level.
